# EUROPEAN PATENT SPECIFICATION

(11) **EP 2 134 789 B1**
(45) Date of publication and mention of the grant of the patent: **21.01.2015**
(21) Application number: 08718103.8
(22) Date of filing: 20.03.2008
(51) Int. Cl.: C08L 81/06, C08L 71/10, F16L 11/04

(54) **NEW FLEXIBLE PIPE**
NEUES FLEXIBLES ROHR
NOUVEAU TUYAU SOUPLE

(30) Priority: 02.04.2007 US 909514 P; 20.04.2007 US 912989 P
(43) Date of publication of application: 23.12.2009
(73) Proprietor: Solvay Specialty Polymers USA, LLC., Alpharetta, GA 30005 (US)
(72) Inventor: WEINBERG, Shari, Atlanta, Fulton, Georgia 30324 (US); EL-HIBRI, Mohammad Jamal, Atlanta, Georgia 30328 (US); BRADEMEYER, Douglas, Cumming, Georgia 30040 (US); ALEXANDER, Brian, B-1050 Brussels (BE); STERN, Brian A., Duluth, Georgia 30097 (US)
(74) Representative: Vande Gucht, Anne
(86) International application number: PCT/EP2008/053391
(87) International publication number: WO 2008/119677

(56) References cited:
- EP-A- 0 217 167
- EP-A- 0 308 803
- EP-A- 0 343 282
- WO-A-2005/028198
- FR-A- 2 885 672
- US-A- 5 223 556

## Description

### CROSS-REFERENCE TO RELATED APPLICATIONS

The present application claims the benefit of U.S. application serial no. 60/909,514 filed April 02, 2007 and U.S. application serial no. 60/912,989 filed April 20, 2007.

### FIELD OF THE INVENTION

The present invention relates to a new flexible pipe comprising at least one layer made of a particular polymer composition.

### BACKGROUND OF THE INVENTION

Many factors such as politics and oil prices have contributed to an increase in deep offshore oil exploration of depths up to 3000 m. New technology such as floating production storage and offloading (FPSO) platforms and subsea production wells has enabled efficient deepwater offshore exploration. This technology necessitates the use of flexible risers, umbilicals, control lines, and other flexible pipes. Flexible pipes offer mobility and flexibility from the standpoint of designing systems. Flexible pipes are suitable for carrying process chemicals back and forth from the bottom of the ocean and subsea wells to floating platforms at sea level. Their length may range from about 1500 to about 3000 m long. Flexible pipes are also suitable for transporting other fluids than crude oil, including hydrocarbon liquids and gases, such as natural gas. In fact, flexible pipes can be useful for transporting virtually any fluid in any environment, including when the fluid to be transported and/or the environment where to transport it is chemically aggressive.

Flexibility is a distinctive property of a flexible pipe. A typical 8" internal diameter flexible pipe should desirably bent to a radius of about 2 m or even less. This flexibility is important notably for floating production systems, and also for flowlines laid on difficult seabed conditions ; flexibility makes it further possible to spool the pipe on a reel or in a carousel for efficient and quick transportation and installation. Yet, flexible pipes must also be strong enough to survive stresses imparted by waves, currents, and tides as well as severe pressures and sharp temperature fluctuations.

Flexible pipes are generally made up of several layers arranged in a modular construction, i.e. at least some of the pipe layers are independent from each other ; desirably, all the pipe layers are independent from each other. Such independent, un-bonded layers are to a certain extent able to move relative to one another so as to allow the pipe to bend. By the way, independent layers need not to meet any severe requirements in terms of adhesion to adjacent layers. They have also the additional advantage that they can be made fit-for-purpose and independently adjusted to best meet a field development requirement.

Flexible pipes include generally corrosion-resistant steel wires as main usual components. The steel wires are generally helically wound, so as to give the structure its high pressure resistance and excellent bending characteristics, thus providing flexibility and superior dynamic behaviour. The wound steel wires are desirably insulated from each other by intermediate polymer abrasion layers.

Precisely, polymer layers are other usual main components of flexible pipes. In addition to their possible highly beneficial use as antiwear sheaths, polymer layers are also useful as leakproof barriers. The outermost layer of a flexible pipe may advantageously be made of a polymer leakproof barrier, which prevents the external environment medium (such as sea water, when drilling offshore) from penetrating inside the flexible pipe structure. At the opposite, the innermost layer of a flexible pipe may also advantageously be made of a polymer leakproof barrier, which prevents the transported fluid (such as crude oil or natural gas, e.g. when drilling offshore), from moving towards the more outer layer(s) of the flexible pipes.

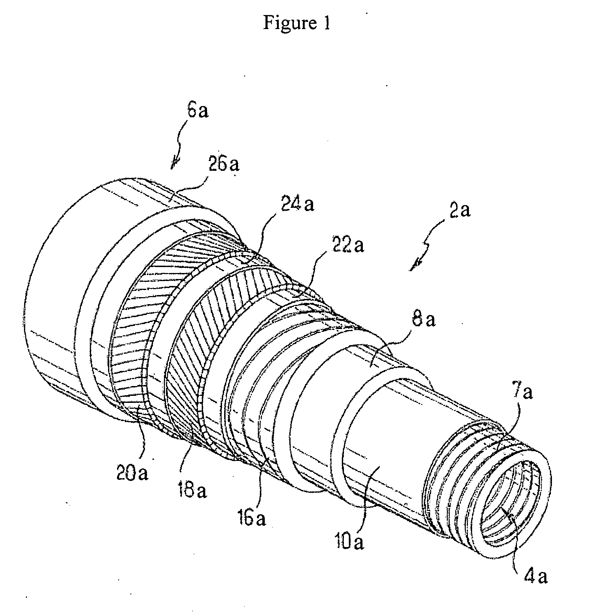

Prior art flexible pipes the design of which are well adapted for offshore exploration are described in the standardized documents published by the American Petroleum Institute (API), and especially documents API 17J and API RP 17B. This type of pipe comprises successive layers, independent of one another, including, on the one hand, helical windings of profiled wires and/or tapes and, on the other hand, at least one sheath made of a polymeric material. Whereas the function of the metal layers is to take up the mechanical forces, both internal and external, the function of the polymeric sheaths is to provide internal or external sealing. The various layers are to a certain extent able to move relative to one another so as to allow the pipe to bend. Various structures exist for such pipes, however they all generally have a multilayer assembly called a pressure vault that is intended to take up the radial forces and a multilayer assembly intended to take up the axial forces. The pressure vault located toward the interior of the pipe generally consists of a short-pitch helical winding of a profiled wire, while the layers intended to take up the axial forces, located toward the outside of the pipe, generally consist of a pair of cross plies of armor wires wound helically with a long pitch. In addition, to prevent at least two of these armor plies coming directly into contact with one another, which would result in their premature wear, a relatively thin intermediate layer of plastic is interposed. Flexible pipes equipped with antiwear layers are described in US 5,730,188 (to Wellstream, Inc.) and WO 2006/120320 (to Technip France), the whole content of both patent titles being herein incorporated by reference. The reader may refer to figure 1 of US'188, wherein polymer layers 14 and 16 are used as antiwear sheaths of a flexible pipe ; the same pipe includes also a polymer layer 12, which acts as overlying fluid barrier. The reader may also refer to figure 1 of Technip's PCT application : a flexible pipe, with a design pretty close to that of Wellstream's one, includes anti-wear plastic layers 22 and 24, as well as a pressure sheath 8 and a covering layer 10, the pressure sheath 8 and the covering layer 10 being also possibly made of polymer.

Whatever their location and function in the flexible pipe multilayer assembly, the polymer layers need to comply with multiple harsh requirements, including high compressive strength, high temperature resistance, hydrolytic stability at high temperatures, toughness and ductility for winding, environmental stress cracking resistance and abrasion resistance.

When a polymer layer is used as the innermost layer of a flexible pipe, it is subject to chemical attack by the transported fluid, especially in the hot underground environment in which down-hole pipes convey oil from deeply buried deposits to the earth surface. Should the transported fluid be oil, the sulfur, sulfur dioxide and carbon dioxide present in the oil typically make it acidic causing corrosion of the interior surface of the pipe. The innermost layer of a flexible pipe may also be abraded by materials insoluble in the oil, including materials which are soluble in the oil at high temperatures of the oil deposit but become insoluble as the oil cools during the rise through the pipe to the earth surface ; among such resultant insoluble materials, it can be cited asphaltenes, paraffin waxes and "scale" which generally includes calcite and/or barite. Further, to avoid plugging by these materials, it may be necessary to clean out the internal surface of the pipe by mechanical scrapping (pigging), chemical or hot oiling treatment, which by its aggressive nature, requires the innermost layer to exhibit a high chemical and abrasion resistance.

When a polymer layer is used as the outermost layer of a flexible pipe, this one may also be corroded by the external environment medium. Typically, when drilling offshore, it may be corroded by sea water. Such water may contain carbonic or hydrochloric acid, and occasionally oil and gas may contain small amounts of corrosive gases such as carbon dioxide and hydrogen sulfide. When either of these gases are dissolved in water, acid is created that may attack the surface of the pipe, causing its possible failure. Further, typical oil well operations include running flexible pipes down hole with appropriate tools ; the repeated spooling may cause fatigue and wear damage that can suddenly cause the outermost layer to fracture and fail.

Intermediate polymer layers, in particular antiwear polymer layers, tend to deteriorate particularly rapidly when the flexible pipes of which they are made up are subjected to severe stresses, such as those encountered when extracting certain subsea oil deposits, located at great depth, and where the hydrocarbon is at a high temperature of around 130°C ; under such conditions, these ones layers may endure temperatures of around 110°C and contact pressures (compressive stresses) of about 300 to 400 bar. In addition to being subjected to severe stresses, intermediate polymer layers, in particular antiwear layers, have to withstand abrasion and friction at an extremely high degree of intensity, typically much higher than that endorsed by the other layers. Further, intermediate polymer layers further be subject to chemical attack resulting from local contacts with chemical agents of the same nature as those with which the innermost and/or the outermost layers are in direct contact. Finally, one or more faces of the intermediate polymer layers, in particular of antiwear layers, may be locally or completely covered by a lubricant, such as some kind of a grease, to reduce somehow the wear intensity caused by the metal armor plies, and make it easier their relative motion with regard to the same.

Various polymers have already been proposed as the main component of a polymer layer of a flexible pipe, including polyolefins, polyurethanes, polyethers, poly(vinylidene fluoride)s, polyamides, poly(amide imide)s, polyimides, poly(ether imides), polyphenylene sulfides, wholly aromatic polyesters, poly(aryl ether sulfone)s and poly(aryl ether ketone)s. The reader may notably refer to US 2005/0121094, US 2006/0127622 (to Du Pont), US 5,601,893 (to Elf Atochem), GB 1 443 225 and GB 2 330 394 (to the Institut Français du Pétrole), EP 1 186 819 (to ABB Research Ltd.), EP 1 741 549 (to UBE), WO 99/67561 (to ABB Offshore Technology) and WO 05/103139 (to Exxon Mobil Chemical), the whole content of all these patent titles being herein incorporated by reference.

US 6,349,747 (to the Institut Français du Pétrole), the whole content of which is herein incorporated by reference, describes a pipe comprising an internal and/or external metal surface coated with a polymer composition comprising a thermoplastic polymer selected from the group consisting of polyetherimides, poly(aryl ether sulfone)s and poly(phenylene ethers), and at least one epoxy resin modified by at least one aromatic polyamine, the said modified epoxy resin being contained on the polymer composition in an amount of about 2 to 85 % by weight, preferably about 30 to 70 % by weight, with respect to the total composition weight. Per US'747, the thermoplastic polymers can be used alone, mixed with each other, or mixed with other polymers such as aromatic polyetherketones or polyphenylene sulfides ; the case being, the weight of aromatic polyetherketone or polyphenylene sulfide ranges from about 1 to about 50 % by weight, with respect to the total weight of thermoplastic polymer. US 6,349,747 does not disclose any specific composition comprising a poly(aryl ether sulfone) and a poly(aryl ether ketone) ; US 6,349,747 keeps also silent about the possible advantages that may result from the combination of such polymers.

PCT application Publ. Nb. 2006/120,320 (to Technip France, hereinafter WO'320) describes a flexible tubular pipe for transporting hydrocarbons comprising armor plies separated by an antiwear layer made of plastic, wherein the said plastic is an amorphous polymer having a glass transition temperature between 175°C and 255°C, preferably polyphenylsulfone (PPSU). According to Technip, PPSU would have all the required mechanical, thermal, aging and tribological properties, especially the wear resistance. The Applicant's opinion is that, while PPSU might be a suitable choice for not very demanding flexible pipe applications, it is in general not performing enough for being used alone in an antiwear layer, because of its insufficient wear and environmental stress rupture resistance, and it is likely not the best polymer choice for this layer. More generally, the Applicant is of the opinion that neat PPSU is likely not the best choice for use in any layer of very demanding flexible pipe applications, when the layer is submitted to severe abrasion and/or chemical attack.

WO'320 further mentions that high-performance semi-crystalline materials could advantageously be envisaged, but refrains from using them (at least in an amount of 20 wt. % or more, as will be seen below), because they would be ill-adapted to processing by extrusion in long tape form (to be well-adapted to processing by extrusion in long tape form is highly desirable in order to be able to tape easily the pipe), and, on the other hand, they would be expensive. The Applicant shares substantially Technip's opinion that high-performance semi-crystalline polymers, such as polyetheretherketone (PEEK), are more expensive than amorphous polymers like PPSU, and also that they are less adapted to processing by extrusion in long tape form than amorphous polymers ; the Applicant further points but that neat PEEK is less tough than PPSU. On the other hand, the Applicant's opinion is that neat PEEK exhibits sufficient wear and environmental stress rupture resistance to be used in the antiwear layer, including in most demanding flexible pipe applications.

In a particular embodiment of WO'320, which the Applicant considers to be the closest prior art, the plastic of the antiwear layer further includes a semi-crystalline polymer, for example PEEK, in a proportion by weight of less than 20 %, so as "to benefit both from the properties of the amorphous polymer and the properties of the semi-crystalline polymer", as Technip says. The Applicant strongly disagrees with this allegation. The Applicant is of the strong opinion that polymer blends comprising more than 80 wt. % of PPSU and less than 20 wt. % PEEK have also insufficient wear and environmental stress rupture resistance, close to that of PPSU taken alone, so that, likewise PPSU taken alone, such polymer blends are in general not an appropriate choice for use as the antiwear layer, and, more generally, as any plastic layer of a flexible pipe.

There is a still a strong need for a flexible pipe comprising one or more polymer layer(s) made up of a polymer material, including but not limited to intermediate antiwear layers, wherein the said polymer material would exhibit an improved overall balance of properties, including a high compressive strength, a high temperature resistance, a high hydrolytic stability at high temperatures, a high toughness and ductility for winding, a high environmental stress rupture resistance and a high abrasion resistance, all this at a lower cost than that of a high performance semi-crystalline polymer like PEEK, and which would further be well-adapted to processing by extrusion in long tape form. In particular, the said polymer layer(s) should exhibit an environmental stress rupture resistance and an abrasion resistance close to those exhibited by polymer layers made up of high performance semi-crystalline polymers like PEEK, but at a lower cost and with a good long tape extrudability. Desirably, the said polymer layer(s) should exhibit at least substantially the same environmental stress rupture resistance and abrasion resistance as those exhibited by polymer layers made up of PEEK, but at a more attractive cost and with a good long tape extrudability.

### THE INVENTION

This need, and still other ones, are met by a flexible pipe (fP) suitable for transporting hydrocarbons, said flexible pipe comprising at least one polymer layer (L) composed of a polymer composition (C) comprising :
- at least one poly(aryl ether ketone) (P1), and
- at least one poly(aryl ether sulfone) (P2),
wherein :
- the weight of the poly(aryl ether ketone) (P1), based on the total weight of the poly(aryl ether ketone) (P1) and the poly(aryl ether sulfone) (P2), is from 35 % to 95 %, and
- the polymer composition (C) is free of epoxy resin modified by at least one aromatic polyamine, or comprises the said epoxy resin modified by at least one polyamine in a weight amount of at most 10 %, based on the total weight of the polymer composition (C).

According to another aspect, the invention provides a method for producing the flexible pipe (fP) as above defined, wherein the polymer composition (C) is extruded, thereby simplifying its processing and in particular allowing long thin sheets to be formed.

### DETAILED DESCRIPTION OF THE INVENTION

The weight of the poly(aryl ether ketone) (P1), based on the total weight of the poly(aryl ether ketone) (P1) and the poly(aryl ether sulfone) (P2), may be of at least 40, 45 or 50 % ; it is preferably above 50 %, more preferably above 55 %, and still more preferably at most 60 %. On the other hand, the weight of the poly(aryl ether ketone) (P1), based on the total weight of the poly(aryl ether ketone) (P1) and the poly(aryl ether sulfone) (P2), may be of at most 90, 85 or 80 % ; it is preferably below 80 %, more preferably below 75 % and still more preferably below 70 %.

The total weight of the poly(aryl ether ketone) (P1) and the poly(aryl ether sulfone) (P2), based on the total weight of the polymer composition (C), is advantageously above 35 %, preferably above 55 %, more preferably above 65 %, and still more preferably above 75 %. In certain embodiments, the total weight of the poly(aryl ether ketone) (P1) and the poly(aryl ether sulfone) (P2), based on the total weight of the polymer composition (C), may be above 80 %, 90 % or 95 %. In a certain particular embodiment to which the preference may sometimes be given, the polymer composition (C) consists essentially of, or even consists of, the poly(aryl ether ketone) (P1) and the poly(aryl ether sulfone) (P2).

The weight of the poly(aryl ether ketone) (P1), based on the total weight of the polymer composition (C), is advantageously above 25 %, preferably above 35 %, more preferably above 40 %, and still more preferably above 45 %.

The weight of the poly(aryl ether sulfone) (P2), based on the total weight of the polymer composition (C), is advantageously above 15 %, preferably above 20 %, and more preferably above 25 %.

### The poly(aryl ether ketone) (P1)

As previously mentioned, the polymer composition (C) contains at least one poly(aryl ether ketone) (P1).

For the purpose of the present invention, the term "poly(aryl ether ketone)" is intended to denote any polymer, generally a polycondensate, of which more than 50 wt. % of the recurring units are recurring units (R1) of one ore more formulae containing at least one arylene group, at least one ether group (-O-) and at least one ketone group [-C(=O)-], the said one formulae being free of sulfone group [-S(=O)₂-].

Preferably, recurring units (R1) are chosen from : 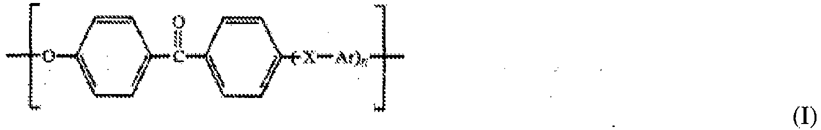 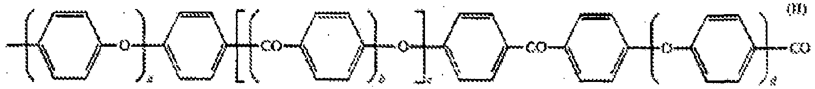 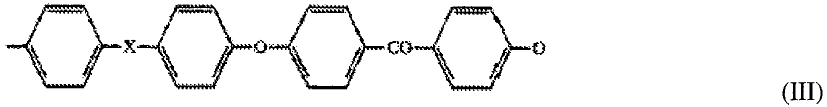 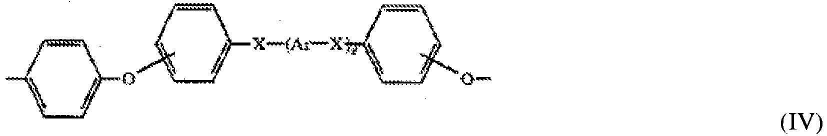 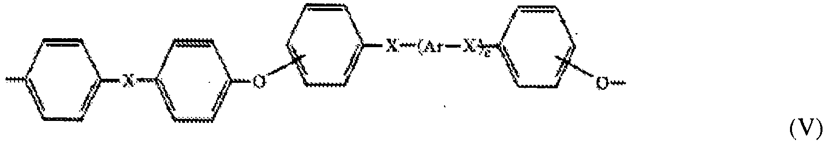 wherein :
- Ar is independently a divalent aromatic radical selected from phenylene, biphenylene or naphthylene,
- X is independently O, C(=O) or a direct bond,
- n is an integer of from 0 to 3,
- b, c, d and e are 0 or 1,
- a is an integer of 1 to 4, and
- preferably, d is 0 when b is 1.

More preferably, recurring units (R1) are chosen from : 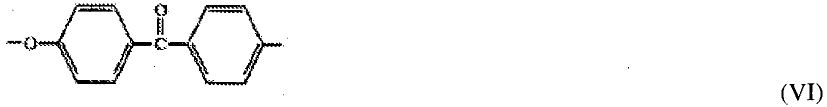 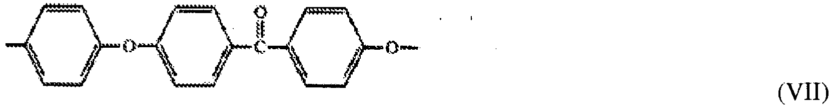 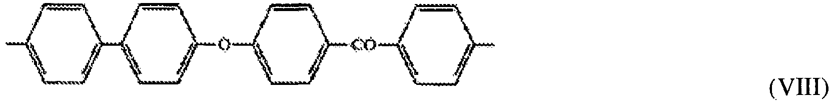 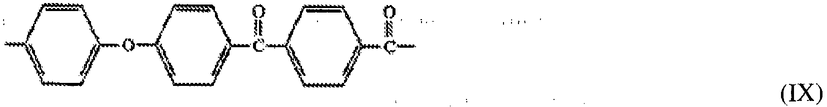 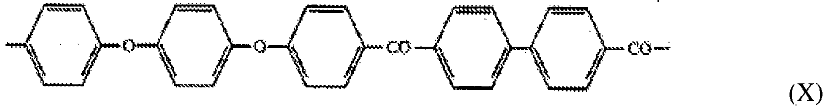 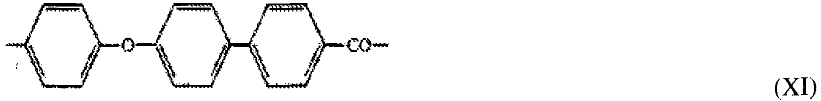 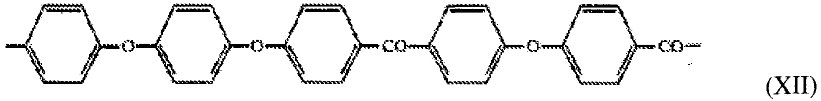 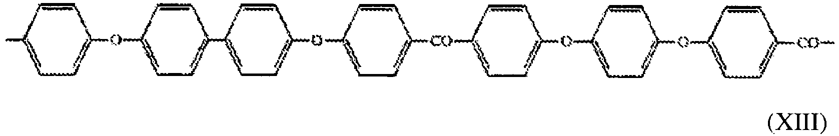 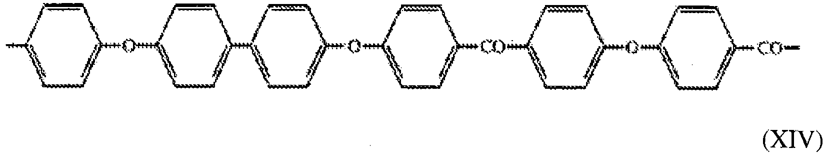 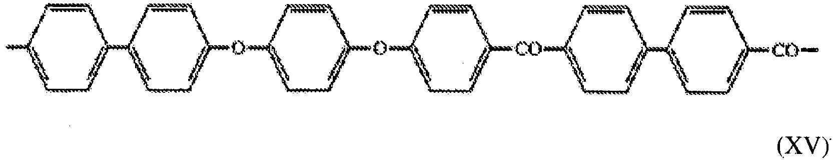 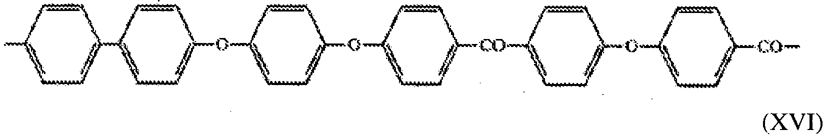 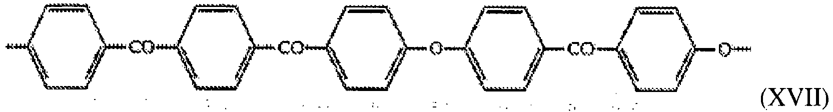 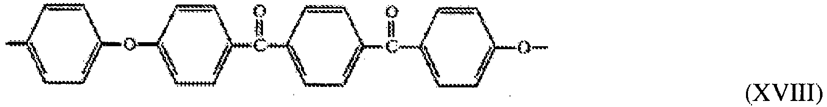 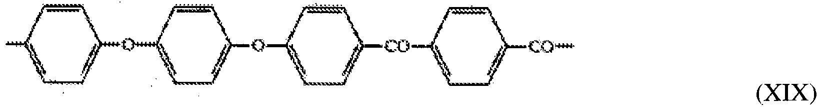 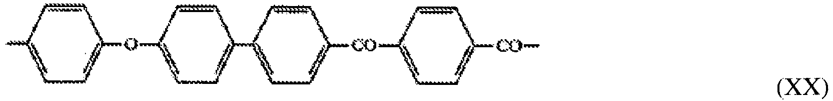 and

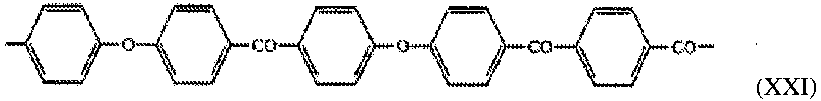

Still more preferably, recurring (R1) are chosen from : 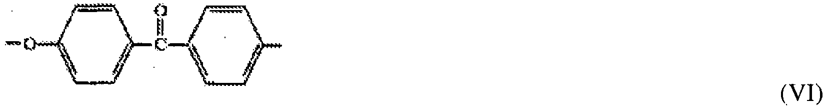 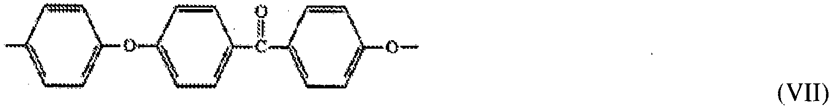 and

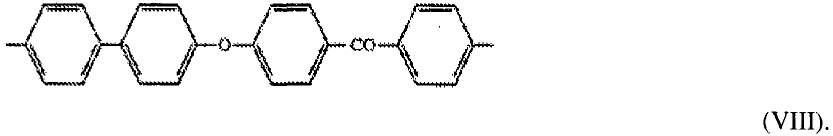

Most preferably, recurring units (R1) are :

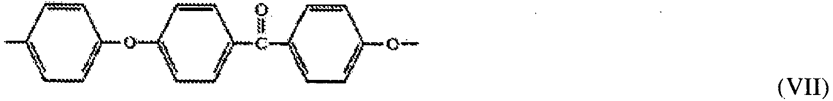

For the purpose of the present invention, a polyetheretherketone is intended to denote any polymer of which more than 50 wt. % of the recurring units are recurring units (R1) of formula (VII).

The poly(aryl ether ketone) (P1) may be notably a homopolymer ; it may also be a random, alternating or block copolymer. When the poly(aryl ether ketone) (P1) is a copolymer, it may notably contain (i) recurring units (R1) of at least two different formulae chosen form formulae (VI) to (XXI), or (ii) recurring units (R1) of one or more formulae (VI) to (XXI) and recurring units (R1*) different from recurring units (R1).

Preferably more than 70 wt. %, more preferably more than 85 wt. % of the recurring units of the poly(aryl ether ketone) (P1) are recurring units (R1). Still more preferably, essentially all the recurring units of the poly(aryl ether ketone) (P1) are recurring units (R1). Most preferably, all the recurring units of the poly(aryl ether ketone) (P1) are recurring units (R1).

Excellent results were obtained when the poly(aryl ether ketone) (P1) was a polyetheretherketone homopolymer, i.e. a polymer of which essentially all, if not all, the recurring units are of formula (VII).

The poly(aryl ether ketone) (P1) has a reduced viscosity (RV) of advantageously at least 0.55 dl/g and preferably of at least 0.70 dl/g ; besides, the RV of the poly(aryl ether ketone) (P1) is advantageously of at most 1.10 dl/g and preferably of at most 0.90 dl/g. The reduced viscosity (RV) is measured in 95-98 % sulfuric acid (d= 1.84 g/ml) at a poly(aryl ether ketone) concentration of 1 g/100 ml. The measurement is performed using a No 50 Cannon-Fleske viscometer. RV is measured at 25 °C in a time less than 4 hours after dissolution, to limit sulfonation.

The poly(aryl ether ketone) (P1) can be prepared by any method.

One well known in the art method comprises reacting a substantially equimolar mixture of at least one bisphenol and at least one dihalobenzoid compound or at least one halophenol compound as described in Canadian Pat. No. 847,963. Preferred bisphenols in such a process are hydroquinone, 4,4'-dihydroxybiphenyl and 4,4'-dihydroxybenzophenone ; preferred dihalobenzoid compounds in such a process are 4,4'-difluorobenzophenone, 4,4'-dichlorobenzophenone and 4-chloro-4'-fluorobenzophenone ; preferred halophenols compounds in such a process are 4-(4-chlorobenzoyl)phenol and (4-fluorobenzoyl)phenol. Accordingly, PEEK homopolymers may notably be produced by the nucleophilic process as described in, for example, U.S. Pat. No. 4,176,222, the whole content of which is herein incorporated by reference.

Another well known in the art method to produce PEEK homopolymers comprises electrophilically polymerizing phenoxyphenoxybenzoic acid or the like, using an alkane sulfonic acid as solvent and in the presence of a condensing agent, as the process described in U.S. Pat. 6,566,484, the whole content of which is herein incorporated by reference. Other poly(aryl ether ketone)s may be produced by the same method, starting from other monomers than phenoxyphenoxybenzoic acid, such as those described in U.S. Pat. Appl. 2003/0130476, the whole content of which is also herein incorporated by reference.

Poly(aryl ether ketone)s, including polyetheretherketones, are commercially available as KETASPIRE^{®} and GATONE^{®} from SOLVAY ADVANCED POLYMERS, L.L.C. ; they are also commercialized notably by VICTREX.

### The poly(aryl ether sulfone) (P2)

For the purpose of the invention, a poly(aryl ether sulfone) is intended to denote any polymer, generally a polycondensate, of which more than 50 wt. % of the recurring units are recurring units (R2) of one or more formulae containing at least one arylene group, at least one and at least one ether group (-O-) and at least one sulfone group [-S(=O)₂-].

Non limitative examples of poly(aryl ether sulfone)s are polymers of which more than 50 wt. %, up to 100 wt. %, of the recurring units are recurring units (R2) of formula (1) and/or (2): 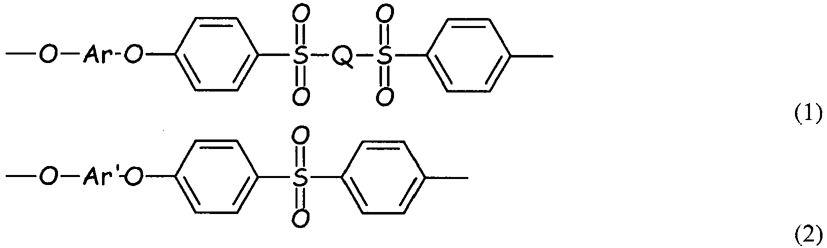 wherein :
- Q is a group chosen among the following structures : 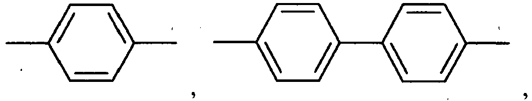 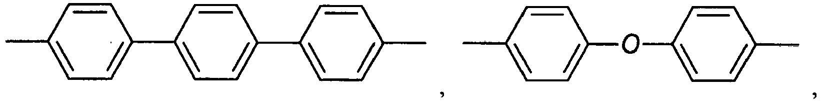 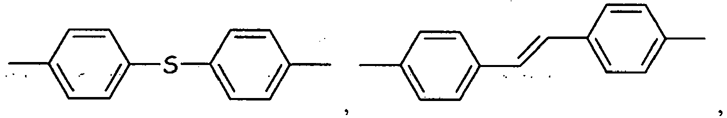 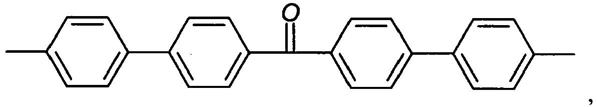 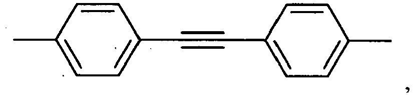 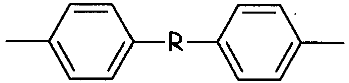 with R being : 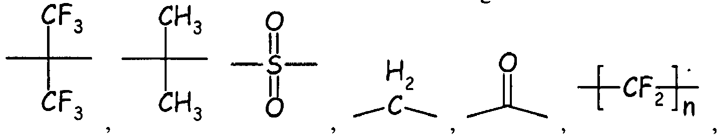 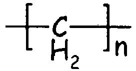 with n = integer from 1 to 6, or an aliphatic divalent group, linear or branched, of up to 6 carbon atoms ; and mixtures thereof;
- Ar is a group chosen among the following structures : 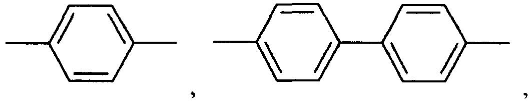 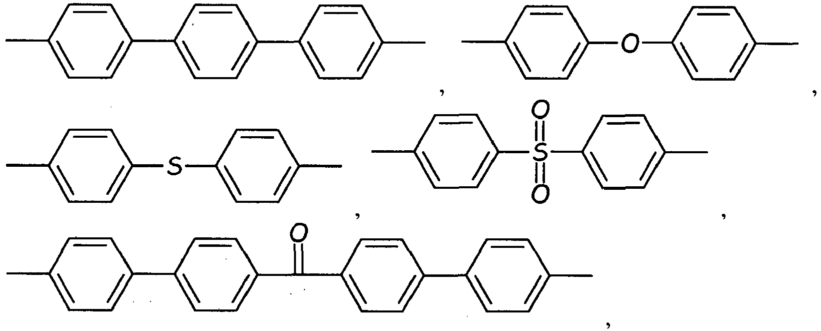 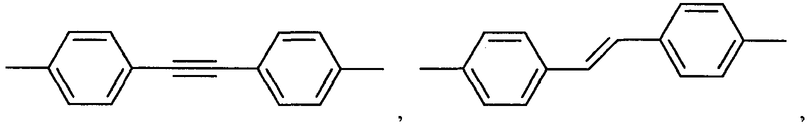 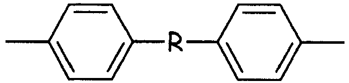 with R being : 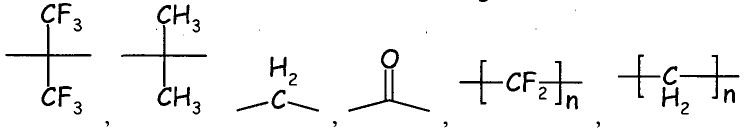 with n = integer from 1 to 6, or an aliphatic divalent group, linear or branched, of up to 6 carbon atoms ;
   and mixtures thereof;
- **Ar'** is a group chosen among the following structures : 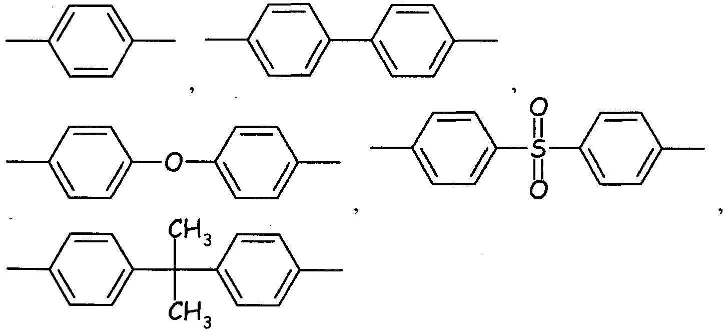 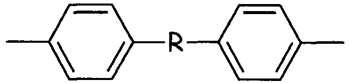 with R being : 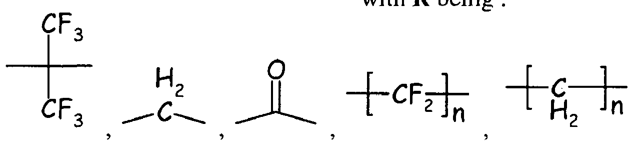 with n = integer from 1 to 6, or an aliphatic divalent group, linear or branched, of up to 6 carbon atoms ;
   and mixtures thereof.

Among such polymers, it can be particularly cited polymers of which more than 50 wt. %, up to 100 wt. %, of the recurring units are recurring units of one or more of formulae (3), (4), (4) and (6):

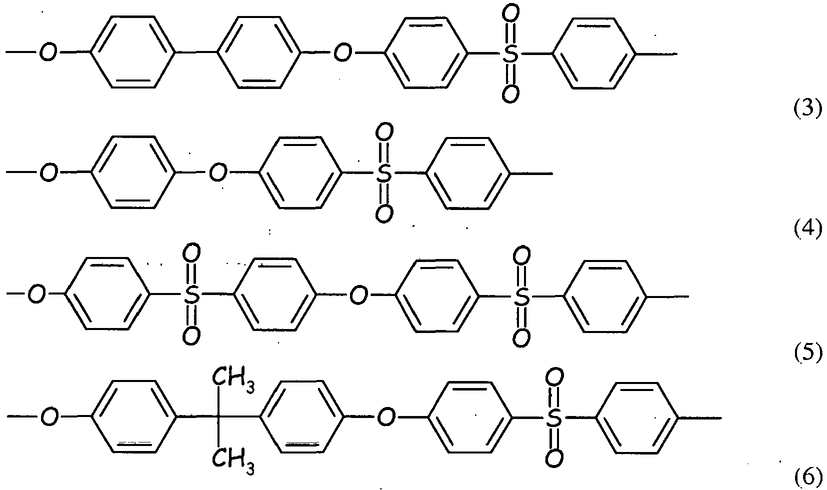

Polymers comprising more than 50 wt. % of recurring units of formula (3) are commonly known as "polyphenylsulfones" and are commercially available notably from SOLVAY ADVANCED POLYMERS, L.L.C. as RADEL^{®} R poly(aryl ether sulfone)s.

Polymers comprising more than 50 wt. % of recurring units of formula (4) are commonly known as "polyetherethersulfones".

Polymers comprising more than 50 wt. % of recurring units of formula (5) are commonly known as polyethersulfones and are commercially available notably from SOLVAY ADVANCED POLYMERS, L.L.C. as RADEL^{®} A poly(aryl ether sulfone)s.

Polymers comprising more than 50 wt. % of recurring units of formula (6) are commonly known as "bisphenol A polysulfones" (or just "polysulfones") and are commercially available notably from SOLVAY ADVANCED POLYMERS, L.L.C. as UDEL^{®}.

The polymer composition (C) may contain one and only one poly(aryl ether sulfone) (P2). Alternatively, the polymer composition (C) may contain two or more one poly(aryl ether sulfone)s (P2) ; for example, it may contain at least one polyphenylsulfone and at least one polysulfone, or at least one polyphenylsulfone and at least one polyethersulfone.

Preferably, the recurring units (R2), as above defined, contain at least one p-biphenylene group 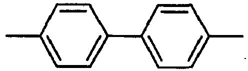 as the at least one arylene group. The case being, the poly(aryl ether sulfone) is commonly known as a poly(biphenyl ether sulfone). For the purpose of the present invention, a poly(biphenyl ether sulfone) is intended to denote any polymer, generally a polycondensate, of which more than 50 wt. % of the recurring units are recurring units (R2) of one ore more formulae containing at least one p-biphenylene group : 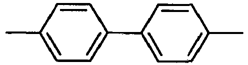 at least one and at least one ether group (-O-) and at least one sulfone group [-S(=O)₂-]. A poly(biphenyl ether sulfone) may further comprise one or more arylene groups other than the p-biphenylene groups, such as phenylene and naphthylene groups. Polyphenylsulfones are poly(biphenyl ether sulfone)s of a particular type.

The polymer composition (C) may contain one and only one poly(biphenyl ether sulfone) (P2). Alternatively, the polymer composition (C) may contain two or more one poly(biphenyl ether sulfone)s (P2) ; for example, it may contain at least one polyphenylsulfone and at least one poly(biphenyl ether sulfone) of which the recurring units (R2) containing at least 2 sulfone groups, such as recurring units of formulae (8) to (11) as defined afterwards.

More preferably, the recurring units (R2) are of one ore more formulae of the general type : 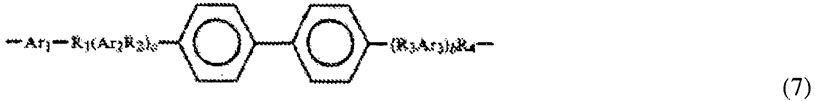 wherein R₁ through R₄ are -O-, -SO₂-, -S-, -C(=O)-, with the proviso that at least one of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene ; and a and b are either 0 or 1.

Still more preferably, recurring units (R2) are chosen from 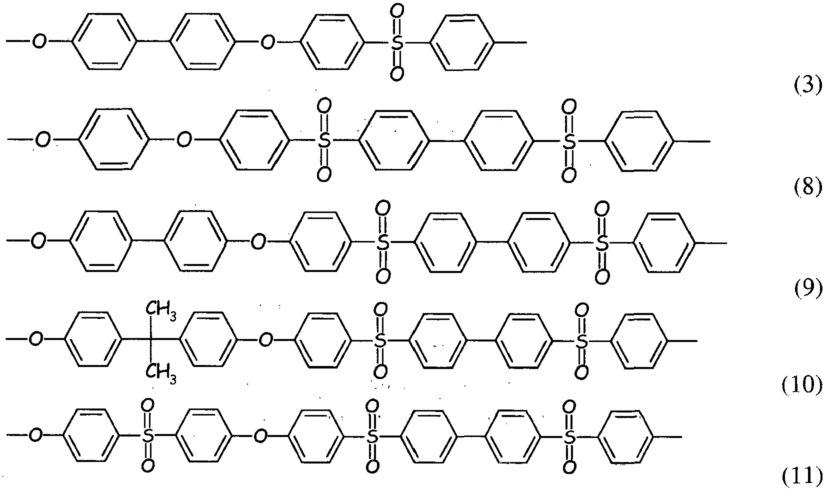 and mixtures thereof.

Most preferably, recurring units (R2) are :

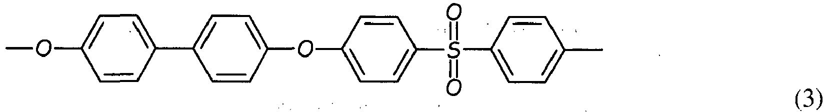

Otherwise said, most preferably the poly(aryl ether sulfone) is a polyphenylsulfone.

The poly(aryl ether sulfone) (P2) may be notably a homopolymer, a random, alternating or block copolymer. When the poly(aryl ether sulfone) (P2) is a copolymer, its recurring units may notably be composed of:
- recurring units (R2) of at least two different formulae chosen among formulae (3), (8), (9), (10) and (11), or
- recurring units (R2) of one or more formulae chosen among formulae (3), (8), (9), (10) and (11), and recurring units (R2) of one or more formulae chosen among formulae (4), (5) and (6).

Preferably more than 70 wt. %, more preferably more than 85 wt. % of the recurring units of the poly(aryl ether sulfone) (P2) are recurring units (R2). Still more preferably, essentially all the recurring units of the poly(aryl ether sulfone) (P2) are recurring units (R2). Most preferably, all the recurring units of the poly(aryl ether sulfone) (P2) are recurring units (R2).

Excellent results were obtained when the poly(aryl ether sulfone) (P2) was a polyphenylsulfone homopolymer, i.e. a polymer of which essentially all, if not all, the recurring units are of formula (3).

The poly(aryl ether sulfone) (P2) can be prepared by any method. Methods well known in the art are those described in U.S. Pat. Nos. 3,634,355 ; 4,008,203 ; 4,108,837 and 4,175,175, the whole content of which is herein incorporated by reference.

### Optional ingredients of the polymer composition (C)

Although the polymer composition (C) contains a high amount of poly(aryl ether ketone) (P1), the layer (L) of which the polymer composition (C) is made up, has surprisingly a very good deformation-under-load capability. Thus, the polymer composition (C) needs not to further incorporate an additive, such as a fiber, to the purpose of increasing its deformation-under-load capabilities. Accordingly, the polymer composition (C) may be free of fiber (F).

Yet, the polymer composition (C) may contain at least one fiber (F), generally in a low amount, essentially to another purpose than that of increasing the deformation-under-load capability of the layer (L). For example, a generally low amount of fiber (F) can be used advantageously to increase the friction and wear resistance of the polymer composition (C). As used herein, a low amount of fiber (F) means generally at most 10 % or 7 %, based on the total weight of the polymer composition (C) ; amounts of fiber (F) of least 1 %, 2 %, 3 % or 5 %, based on the total weight of the polymer composition (C), have proved to be efficient to increase substantially the friction and wear resistance of the polymer composition (C).

In rather rare instances when extremely high deformation-under-load capabilities are required, a higher amount of fiber (F) may be incorporated to the composition. This higher weight amount does not generally exceed 30 %. Weight amounts of fiber (F) above 10 %, up to 30 %, based on the total weight of the polymer composition (C), can be used.

The skilled person will easily recognize the fiber (F) which fits best its composition and encompassed utility. Generally, the fiber (F) is chosen depending on its chemical nature, its length and diameter.

Non limitative examples of suitable fibers include glass fibers, asbestos, graphitic carbon fibers some of them having possibly a graphite content of at least 99 %, amorphous carbon fibers, pitch-based carbon fibers, PAN-based carbon fibers, synthetic polymeric fibers, aluminum fibers, aluminum silicate fibers, oxide of metals of such aluminum fibers, titanium fibers, magnesium fibers, rock wool fibers, steel fibers, silicon carbide fibers, boron fibers, and mixtures thereof.

Preferably, the fiber (F) is chosen from glass fibers and carbon fibers. Carbon fibers, especially carbon fibers having a graphite content of at least 99 %, are particularly efficient as anti-friction, anti-wear additive.

The fiber (F) has often a diameter preferably between 1 µm and 50 µm. Its length is often between 50 µm and 50 mm.

The fiber (F) is preferably formulated with a high temperature sizing, since said high temperature sizing provides superior interfacial adhesion with polymers that require generally to be processed at high temperatures, like PEEK, PEKK and PPSU.

The polymer composition (C) may further comprise at least one anti-friction and/or anti-wear non fibrous, non polymeric additive, generally in a weight amount which does not exceed 15 %, based on the total weight of the polymer composition (C). Suitable anti-friction and/or anti-wear non fibrous, non polymeric additives include graphite powder, molybdenum disulfide, lead, lead oxide, zinc oxide, zinc borate, titanium dioxide, and mixtures thereof. The weight amount of the anti-friction and/or anti-wear non fibrous, non polymeric additive may be of at least 1 %, 2 %, 3 % or 5 %, based on the total weight of the polymer composition (C) ; besides, it may be of at most 10 % or 7 %.

The polymer composition (C) may further comprise at least one polymer (P3), other than the poly(aryl ether ketone) (P1) and the poly(aryl ether sulfone) (P2). The weight amount of the polymer (P3), based on the total weight of the polymer composition (C), is generally below 30 % ; the weight amount of the polymer (P3), based on the total weight of the polymer composition (C), may be of at most 25 %, 20 %, 15 % or 10 %. Besides, it may be of at least 1 %, 2 %, 3 %, 5 % or 10 %, based on the total weight of the polymer composition (C).

Expressed otherwise, the weight of polymer (P3), based on the total weight of the polymers of the polymer composition (C) [i.e. the poly(aryl ether ketone) (P1), the poly(aryl ether sulfone) and the polyarylene (P3), if present] is also generally below 30 % ; the weight amount of the polymer (P3), based on the total weight of the polymers of the polymer composition (C), may be of at most 25 %, 20 %, 15 % or 10 %, and of at least 1 %, 2 %, 3 %, 5 %, or 10 %. Such additional polymer (P3) may be useful notably for tuning finely the properties of the polymer composition (C) with the requirements of the layer (L). The polymer (P3) may be selected from a first group consisting of poly(phenylene sulfide)s, wholly aromatic polyesters, polyphthalamides, and polyamides obtained by the polycondensation reaction of meta-xylylene diamine with an aliphatic diacid, and mixtures thereof. The polymers of this first group are all semi-crystalline cost-attractive polymers, which exhibit generally a higher environmental stress rupture and higher wear resistance than the poly(aryl ether sulfone) (P2). For the same reason and also possibly to increase the friction and wear properties of the polymer composition (C), this one may further contain, as the polymer (P3), at least one fluoropolymer, such as polytetrafluorethylene, ETFE, CTFE, ECTFE, polyvinylidene fluoride (PVDF) and perfluoroalkylvinylethers [like perfluoromethylvinylether (MFA) and perfluoropropylvinylether (PFA)]. The polymer (P3) may also be selected from another group consisting of certain amorphous polymers, in particular polycarbonates and polyphenylenes.

The polymer composition (C) may further contain conventional ingredients of poly(aryl ether ketone) and poly(aryl ether sulfone) compositions, including lubricating agents, heat stabilizers, anti-static agents, organic and/or inorganic pigments, carbon black, acid scavengers, such as MgO, stabilizers, i.e., metal oxides and sulfides such as zinc oxide and zinc sulfide, antioxidants, flame retardants and smoke-suppressing agents.

The polymer composition (C) is free of epoxy resin modified by at least one aromatic polyamine, or comprises the said epoxy resin modified by at least one aromatic polyamine in a weight amount of at most 10 %, preferably at most 1.0 %, based on the total weight of the polymer composition (C). The said epoxy resin modified by at least one aromatic polyamine is as defined in US 6,349,747, i.e. an epoxy resin formed from at least one polyepoxide containing at least two primary epoxy groups in its molecule, and at least one alkyl substituent containing 1 to 12 carbon atoms located α to one of the amine groups, the mole ratio of the amine to the epoxy being such that the amine group corresponds to 1.6 to 2.6 epoxy groups. Preferably, the polymer composition (C) is free of epoxy resin or comprises the said epoxy resin in a weight amount of at most 10 %, preferably at most 1.0 %, based on the total weight of the polymer composition (C). Any polyepoxide containing at least two primary epoxy groups in its molecule polymer may fall under the general definition of the epoxy resin. Commercially available epoxy resins include but are not limited to diglycidyl ether of bisphenol A or bisphenol F, bisphenol formol resin, cycloaliphatic resins, tri- or tetrafunctional resins, resins formed from triglycidylether-isocyanurate and/or triglycidylether-cyanurate and/or triglycidyl-cyanurate and/or triglycidyl-isocyanurate, and mixtures of at least two of these resins. Other epoxy resins are cited in US 4,921,047, the whole content of which is herein incorporated by reference. More preferably, the polymer composition (C) is free of any curable polymer (including but not limited to an epoxy resin), or comprises the said curable polymer in a weight amount of at most 10 %, preferably at most 1.0 %, based on the total weight of the polymer composition (C). As used herein, a curable polymer is a polymer capable of being modifed, being modified, or having been modified by a curing process, wherein a curing accelerator is generally added to the curable polymer, followed by a treatment with heat or high-energy radiation which alters the structure of the raw thermoplastic curable polymer, thus transforming it into a more useful thermosetting product. As herein used, the terms "epoxy resin modified by at least one aromatic polyamine" and "epoxy resin", likewise the expression "curable polymer", denote indifferently the corresponding resins before, during or after a possible curing process. The presence of curable polymers, including but not limited to epoxy resins, is often of no utility in the polymer composition (C), because this one is advantageously formed by extrusion, thereby simplifying its processing and in particular allowing long thin sheets to be formed. In addition, the presence of curable polymer, such as epoxy resins, is generally detrimental for the properties of the polymer composition (C).

The polymer composition (C) is advantageously prepared by any conventional mixing method. A preferred method comprises dry mixing the ingredients of the polymer composition (C) in powder or granular form, using e.g. a mechanical blender, then extruding the mixture into strands and chopping the strands into pellets.

### The flexible pipe (fP)

The flexible pipe of the present invention [flexible pipe (fP)] is advantageously tubular.

The flexible pipe (fP) is suitable for transporting hydrocarbons, in particular transporting crude oil and/or natural gas. However, it may also be used advantageously for transporting fluids other than hydrocarbons, including but not limited to as acids, alcohols, ketones, and corrosive vapors and gases.

The flexible pipe (fP) generally comprises a hollow circular section, inside which a fluid, such as the hydrocarbon, can be transported. Thus, a particular aspect of the present invention is directed to a flexible pipe (fP) comprising a hollow circular section, through which a fluid is effectively being transported.

The flexible pipe (fP) comprises generally a plurality of layers, such as metal layers and polymer layers. Preferably, at least at some of the layers of the flexible pipe (fP) are independent from each other. Very preferably, all the layers of the flexible pipe (fP) are independent from each other. Such independent, un-bonded layers are to a certain extent able to move relative to one another so as to allow the flexible pipe (fP) to bend.

The flexible pipe (fP) may comprise one or more polymer layers (L).

The flexible pipe (fP) may comprise a polymer layer (L) which is the innermost layer thereof (that layer susceptible of being in deep contact with the fluid to be transported, e.g. hydrocarbon, when drilling offshore).

The flexible pipe (fP) may comprise a polymer layer (L) which is the outermost layer thereof (that layer susceptible of being in deep contact with the external environment through which the flexible pipe passes, such as sea water, when drilling offshore).

The flexible pipe (fP) may comprise at least one polymer layer (L) which is an intermediate layer thereof. The flexible pipe (fP) may comprise one, two, three, four, or even much more intermediate polymer layers ; in normal working conditions of the flexible pipe (fP), intermediate layers are neither susceptible of being in deep contact with the fluid to be transported, nor with the external environment.

In a preferred embodiment, the flexible pipe (fP) comprises at least two metal armor plies separated by an antiwear polymer layer (L). Each of said plies is preferably produced by helically winding a longitudinal metal element. Besides, said antiwear polymer layer (L) separating the at least two metal armor plies is preferably produced by helically winding a tape composed of the polymer composition (C).

In another preferred embodiment, the flexible pipe (fP) comprises a pressure vault and a metal armor ply separated by an antiwear polymer layer (L). Said pressure vault is preferably produced by helically winding a profiled metal wire with a short pitch. Besides, said antiwear polymer layer (L) separating the pressure vault and the metal armor ply is also preferably produced by helically winding a tape composed of the polymer composition (C).

The above two embodiments can be combined together.

According to another aspect of the same embodiment, the invention provides a preferred method for producing the flexible pipe (fP), said method being of the type in which at least two longitudinal metal elements are wound helically in sequence so as to form two armor plies, tapes composed of the polymer composition (C) being helically wound between said armor plies so as to form the layer (L), said layer (L) being an antiwear layer. Furthermore, and particularly advantageously said polymer composition (C) is extruded, thereby simplifying the processing of the material and in particular allowing long thin sheets to be formed. Preferably, said long thin sheets are slit so as to obtain said tapes so that they are in a condition for installing them on a pipe production device. Moreover, said tapes are advantageously butted together by ultrasonic welding.

Other features and advantages of the invention will emerge upon reading the following description of particular embodiments of the invention, given by way of indication but implying no limitation, with reference to the appended drawings in which the figures are partial schematic views in perspective of various flexible tubular pipes (fP) according to the invention.

Figure 1 of the present patent title shows, in part, a portion of a flexible pipe 2a in accordance with the present invention, which comprises intermediate antiwear layers (L) composed of a polymer composition (C). The flexible pipe, from the inside 4a to the outside 6a : a flexible metal tube or carcass 7a, produced by a short-pitch helical winding of metal wires or strips ; an internal sealing sheath or pressure sheath 8a placed around the carcass 7a ; a covering layer 10a of plastic, between the carcass 7a and the pressure sheath 8a ; a pressure vault 16a formed from a short-pitch winding around the pressure sheath 8a of an interlocked profiled metal wire intended to take up the internal compressive forces ; a first tensile armor ply 18a and a second tensile armor ply 20a. These armor plies are formed from wires wound with a long pitch and intended to take up the longitudinal tensile forces to which the flexible pipe 2a may be subjected. Furthermore, the pipe 2a has a first helical winding 22a of a tape of plastic, so as to form a first antiwear layer between the pressure vault 16a and the first armor ply 18a, and a second helical winding 24a of a tape of plastic, to form a second antiwear layer between the two tensile armor plies 18a, 20a. Thanks to these two antiwear layers, the armor plies 18a, 20a and the pressure vault 16a are not, respectively and directly in contact with one another so that, when the flexible pipe 2a bends, there is no wear due to the rubbing of the metal armor wires on one another. Antiwear layers 22a and 24a are composed of a polymer composition falling under the general definition of polymer composition (C) [layers (L)]. Antiwear layers 22a and 24a may be strictly identical in nature, or they may be different, with the proviso that they all fall under the general definition of polymer composition (C). Further, the covering layer 10a may also advantageously be composed of a polymer composition falling under the general definition of polymer composition (C). To a lesser extent, this is also true for the pressure sheath 8a, which might also be composed of a polymer composition falling under the general definition of polymer composition (C), e.g. a polymer blend composed of 65 wt. % of polyetheretherketone homopolymer and 35 wt. % of polyphenylsulfone homopolymer. According to one particular embodiment of the invention, the polymer composition (C) is extruded through a wide sheet die having a width for example of 1.00 meter, so as to obtain a long sheet with a thickness of e.g. 1.5 mm and a width of approximately 1.00 meter. Simultaneously, after being cooled, the sheet is wound so as to produce a mother reel containing a few hundred meters. Next, the sheet is slit to obtain tapes ranging typically from 50 to 100 mm in width, which are rewound onto daughter reels, to be installed on a conventional tape-winding device mounted online with a spiraler or armorer for laying the metal armor wires. Consequently, there is no need to modify or adapt said existing tape-winding device in order to install these plastic tapes thereon.

According to a preferred method in accordance with the invention, a profiled wire is firstly wound helically with a short pitch so as to produce the pressure vault 16a. Next, a plastic tape, of the aforementioned type composed of the polymer composition (C), is helically wound so as to produce the first winding 22a on the pressure vault 16a. This plastic tape is generally applied with a tension of around 100 to 150 daN, which induces an average stress on the tape of around 10 to 20 MPa. Furthermore, and according to one particularly advantageous feature of the invention, the plastic tapes are butted together, when this is necessary, by ultrasonic spot welding. To do this, the two ends of the tape to be butted are brought together, one on top of the other, and a suitable sonotrode is applied to the two ends.

Next, the first tensile armor ply 18a is formed on the first winding 22a and a plastic tape is again wound helically onto the tensile armor ply 18a, to form the second winding 24a.

Finally, the second tensile armor ply 20a is applied on the second winding 24a and then covered with a protective sheath 26a.

However, other plastic or metallic layers can be incorporated into the flexible pipe 2a upstream of the pressure vault 16a or downstream of the second tensile armor ply 20a.

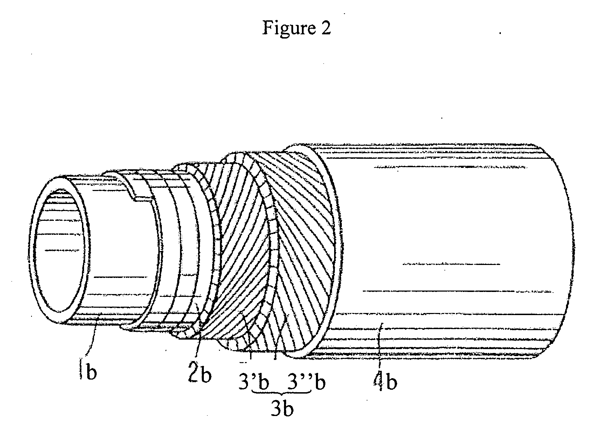

Figure 2 shows, in part, a portion of another flexible pipe in accordance with the present invention, the innermost layer of which and/or the outermost layer of which is composed of a polymer composition (C).

According to figure 2, an inner pipe 1b of plastic is covered with a pressure-resistant armor 2b which, in the example illustrated, is formed by winding a preformed shape wound helically at an angle exceeding about 85°C, for example, relative to the pipe axis. The inner pipe 1b and pressure resistant armor 2b are covered with a traction-resistant armor including two cross-layers 3b (3'b, 3"b) fashioned of shapes or elongated elements helically wound in two layers having opposite pitches. The winding angle of the shapes or elongated elements is usually between 20°C and 50°C relative to the pipe axis. An outer sheath 4b, made of plastic, covers the above assembly thus formed. In accordance with the present invention, at least one of the inner pipe 1b and the outer sheath 4b is composed of a polymer composition falling under the general definition of polymer composition (C), e.g. a polymer blend composed of 65 wt. % of polyetheretherketone homopolymer and 35 wt. % of polyphenylsulfone homopolymer.

However, other plastic or metallic layers can be incorporated into the flexible pipe of figure 2. In particular, this flexible pipe may advantageously further include two antiwear layers 5b and 6b (not represented on figure 2), respectively interposed between the pressure-resistant armor 2b and the cross-layer 3'b of the traction-resistant armor 3b on one hand, and between the cross-layers 3'b and 3"b of the traction-resistant armor 3b on the other hand.

## Claims

1. Flexible pipe (fP) suitable for transporting hydrocarbons and suitable for being spooled on a reel or in a carousel for efficient and quick transportation and installation, said flexible pipe comprising at least one polymer layer (L) composed of a polymer composition (C) comprising :
- at least one poly(aryl ether ketone) (P1), and
- at least one poly(aryl ether sulfone) (P2),
wherein :
- the weight of the poly(aryl ether ketone) (P1), based on the total weight of the poly(aryl ether ketone) (P1) and the poly(aryl ether sulfone) (P2), is from 35 % to 95 %, and
- the polymer composition (C) is free of epoxy resin modified by at least one aromatic polyamine, or comprises the said epoxy resin modified by at least one polyamine in a weight amount of at most 10 %, based on the total weight of the polymer composition (C).

2. Flexible pipe according to claim 1, **characterized in that** the weight of the poly(aryl ether ketone) (P1), based on the total weight of the poly(aryl ether ketone) (P1) and the poly(aryl ether sulfone) (P2), is above 50 % and below 70%.

3. Flexible pipe according to any one of the preceding claims, **characterized in that** the total weight of the poly(aryl ether ketone) (P1) and the poly(aryl ether sulfone) (P2), based on the total weight of the polymer composition (C), is above 65 % and below 80 %.

4. Flexible pipe according to any one of the preceding claims, **characterized in that** the polymer composition (C) consists essentially of the poly(aryl ether ketone) (P1) and the poly(aryl ether sulfone) (P2).

5. Flexible pipe according to any one of the preceding claims, **characterized in that** the poly(aryl ether ketone) (P1) is a polyetheretherketone homopolymer.

6. Flexible pipe according to any one of the preceding claims, **characterized in that** the poly(aryl ether sulfone) (P2) is a poly(biphenyl ether sulfone).

7. Flexible pipe according to any one of the preceding claims, **characterized in that** the poly(aryl ether sulfone) (P2) is a polyphenylsulfone homopolymer.

8. Flexible pipe according to any one of the preceding claims, **characterized in that** the polymer composition (C) is free of any curable polymer.

9. Flexible pipe according to any one of the preceding claims, **characterized in that** it is tubular and comprises a hollow circular section through which a fluid is being transported.

10. Flexible pipe according to any one of the preceding claims, **characterized in that** it comprises a plurality of layers, at least at some of them being independent from each other.

11. Flexible pipe according to any one of the preceding claims, **characterized in that** it comprises a plurality of layers, all the layers of the flexible pipe being independent from each other.

12. Flexible pipe according to any one of the preceding claims, **characterized in that** it comprises a polymer layer (L) which is the innermost layer thereof.

13. Flexible pipe according to any one of the preceding claims, **characterized in that** it comprises a polymer layer (L) which is the outermost layer thereof.

14. Flexible pipe according to any one of the preceding claims, **characterized in that** it comprises at least one polymer layer (L) which is an intermediate layer thereof.

15. Flexible pipe according to any one of the preceding claims, **characterized in that** the flexible pipe (fP) comprises at least two metal armor plies separated by an antiwear polymer layer (L).

16. Flexible pipe according to any one of the preceding claims, **characterized in that** the flexible pipe (fP) comprises a pressure vault and a metal armor ply separated by an antiwear polymer layer (L).

17. Method for producing the flexible pipe (fP) according to any one of the preceding claims, **characterized in that**:
at least two longitudinal metal elements are wound helically in sequence so as to form two armor plies, and
tapes composed of the polymer composition (C) are helically wound between said armor plies so as to form the layer (L), said layer (L) being an antiwear layer,
and
the polymer composition (C) is extruded, so as to form long thin sheets, said long thin sheets being slit so as to obtain said tapes, and
said tapes are butted together by ultrasonic welding.

## Patentansprüche

1. Flexibles Rohr (fP), das zum Transport von Kohlenwasserstoffen geeignet ist und geeignet ist, um zum/zur effizienten und schnellen Transport und Installation auf eine Spule oder in ein Karussell gewickelt zu werden, wobei das flexible Rohr wenigstens eine Polymerschicht (L) umfasst, die aus einer Polymerzusammensetzung (C) zusammengesetzt ist, welche Folgendes umfasst:
- wenigstens ein Poly(aryletherketon) (P1), und
- wenigstens ein Poly(arylethersulfon) (P2),
- wobei
- das Gewicht des Poly(aryletherketons) (P1), basierend auf dem Gesamtgewicht des Poly(aryletherketons) (P1) und Poly(arylethersulfons) (P2) 35% bis 95% beträgt, und
- die Polymerzusammensetzung (C) frei von Epoxidharz ist, das durch wenigstens ein aromatisches Polyamin modifiziert ist, oder das Epoxidharz umfasst, das durch wenigstens ein Polyamin in einem Gewichtsverhältnis von höchstens 10%, basierend auf dem Gesamtgewicht der Polymerzusammensetzung (C), modifiziert ist.

2. Flexibles Rohr nach Anspruch 1, **dadurch gekennzeichnet, dass** das Gewicht des Poly(aryletherketons) (P1), basierend auf dem Gesamtgewicht des Poly(aryletherketons) (P1) und Poly(arylethersulfons) (P2) über 50% und unter 70% liegt.

3. Flexibles Rohr nach einem der vorangehenden Ansprüche, **dadurch gekennzeichnet, dass** das Gesamtgewicht des Poly(aryletherketons) (P1) und des Poly(arylethersulfons) (P2), basierend auf dem Gesamtgewicht der Polymerzusammensetzung (C) über 65% und unter 80% liegt.

4. Flexibles Rohr nach einem der vorangehenden Ansprüche, **dadurch gekennzeichnet, dass** die Polymerzusammensetzung (C) im Wesentlichen aus dem Poly(aryletherketon) (P1) und dem Poly(arylethersulfon) (P2) besteht.

5. Flexibles Rohr nach einem der vorangehenden Ansprüche, **dadurch gekennzeichnet, dass** das Poly(aryletherketon) (P1) ein Polyetheretherketonhomopolymer ist.

6. Flexibles Rohr nach einem der vorangehenden Ansprüche, **dadurch gekennzeichnet, dass** das Poly(arylethersulfon) (P2) ein Poly(biphenylethersulfon) ist.

7. Flexibles Rohr nach einem der vorangehenden Ansprüche, **dadurch gekennzeichnet, dass** das Poly(arylethersulfon) (P2) ein Polyphenylsulfonhomopolymer ist.

8. Flexibles Rohr nach einem der vorangehenden Ansprüche, **dadurch gekennzeichnet, dass** die Polymerzusammensetzung (C) frei von einem härtbaren Polymer ist.

9. Flexibles Rohr nach einem der vorangehenden Ansprüche, **dadurch gekennzeichnet, dass** es rohrförmig ist und einen hohlen kreisförmigen Querschnitt umfasst, durch welchen eine Flüssigkeit transportiert wird.

10. Flexibles Rohr nach einem der vorangehenden Ansprüche, **dadurch gekennzeichnet, dass** es mehrere Schichten umfasst, wobei wenigstens einige von diesen unabhängig voneinander sind.

11. Flexibles Rohr nach einem der vorangehenden Ansprüche, **dadurch gekennzeichnet, dass** es mehrere Schichten umfasst, wobei alle Schichten des flexiblen Rohrs unabhängig voneinander sind.

12. Flexibles Rohr nach einem der vorangehenden Ansprüche, **dadurch gekennzeichnet, dass** es eine Polymerschicht (L) umfasst, welche die innerste Schicht davon ist.

13. Flexibles Rohr nach einem der vorangehenden Ansprüche, **dadurch gekennzeichnet, dass** es eine Polymerschicht (L) umfasst, welche die äußerste Schicht davon ist.

14. Flexibles Rohr nach einem der vorangehenden Ansprüche, **dadurch gekennzeichnet, dass** es mindestens eine Polymerschicht (L) umfasst, welche eine mittlere Schicht davon ist.

15. Flexibles Rohr nach einem der vorangehenden Ansprüche, **dadurch gekennzeichnet, dass** das flexible Rohr (fP) wenigstens zwei Metallarmierungslagen umfasst, die durch eine abnutzungsmindernde Polymerschicht (L) getrennt sind.

16. Flexibles Rohr nach einem der vorangehenden Ansprüche, **dadurch gekennzeichnet, dass** das flexible Rohr (fP) ein Druckgewölbe und eine Metallarmierungslage umfasst, die durch eine abnutzungsmindernde Polymerschicht (L) getrennt sind.

17. Verfahren zur Herstellung des flexiblen Rohrs (fP) nach einem der vorangehenden Ansprüche, **dadurch gekennzeichnet, dass**
wenigstens zwei in Längsrichtung ausgerichtete Metallelemente spiralförmig der Reihe nach gewunden sind, um derart zwei Armierungslagen zu bilden, und
Bänder, die aus der Polymerzusammensetzung (C) zusammengesetzt sind, spiralförmig zwischen den Armierungslagen gewickelt werden, um dadurch die Schicht (L) zu bilden, wobei die Schicht (L) eine abnutzungsmindernde Schicht ist, und
die Polymerzusammensetzung (C) extrudiert ist, um lange dünne Bahnen zu bilden, wobei die langen dünnen Bahnen derart geschlitzt sind, dass die Bänder erhalten werden, und
wobei die Bänder durch Ultraschallschweißen verjüngt zusammengefügt werden.

## Revendications

1. Tuyau flexible (fP) approprié pour transporter des hydrocarbures et approprié pour être enroulé sur une bobine ou dans un carrousel en vue d'un transport et d'une installation rapides et efficaces, ledit tuyau flexible comprenant au moins une couche de polymère (L) composée d'une composition polymère (C), comprenant:
- au moins un poly(aryle éther cétone) (P1), et
- au moins un poly(aryle éther sulfone) (P2),
- dans lequel:
- le poids du poly(aryle éther cétone) (P1), basé sur le poids total du poly(aryle éther cétone) (P1) et du poly(aryle éther sulfone) (P2), est compris entre 35 % et 95 %, et
- la composition polymère (C) est exempte de résine époxy modifiée par au moins une polyamine aromatique, ou comprend ladite résine époxy modifiée par au moins une polyamine en une quantité pondérale d'au maximum 10 %, basée sur le poids total de la composition polymère (C).

2. Tuyau flexible selon la revendication 1, **caractérisé en ce que** le poids du poly(aryle éther cétone) (P1), basé sur le poids total du poly(aryle éther cétone) (P1) et du poly(aryle éther sulfone) (P2), est supérieur à 50 % et inférieur à70%.

3. Tuyau flexible selon l'une quelconque des revendications précédentes, **caractérisé en ce que** le poids total du poly(aryle éther cétone) (P1), et du poly(aryle éther sulfone) (P2), basé sur le poids total de la composition polymère (C), est supérieur à 65 % et inférieur à 80 %.

4. Tuyau flexible selon l'une quelconque des revendications précédentes, **caractérisé en ce que** la composition polymère (C) est essentiellement composée du poly(aryle éther cétone) (P1) et du poly(aryle éther sulfone) (P2).

5. Tuyau flexible selon l'une quelconque des revendications précédentes, **caractérisé en ce que** le poly(aryle éther cétone) (P1) est un homopolymère de polyétheréthercétone.

6. Tuyau flexible selon l'une quelconque des revendications précédentes, **caractérisé en ce que** le poly(aryle éther sulfone) (P2) est un poly(biphényle éther sulfone).

7. Tuyau flexible selon l'une quelconque des revendications précédentes, **caractérisé en ce que** le poly(aryle éther sulfone) (P2) est un homopolymère de polyphénylsulfone.

8. Tuyau flexible selon l'une quelconque des revendications précédentes, **caractérisé en ce que** la composition polymère (C) est exempte de tout polymère durcissable.

9. Tuyau flexible selon l'une quelconque des revendications précédentes, **caractérisé en ce qu'**il est tubulaire et présente une section circulaire creuse à travers laquelle un fluide est transporté.

10. Tuyau flexible selon l'une quelconque des revendications précédentes, **caractérisé en ce qu'**il comprend une pluralité de couches, au moins plusieurs de celles-ci étant indépendantes les unes des autres.

11. Tuyau flexible selon l'une quelconque des revendications précédentes, **caractérisé en ce qu'**il comprend une pluralité de couches, toutes les couches du tuyau flexible étant indépendantes les unes des autres.

12. Tuyau flexible selon l'une quelconque des revendications précédentes, **caractérisé en ce qu'**il comprend une couche de polymère (L) qui est la couche la plus intérieure de celui-ci.

13. Tuyau flexible selon l'une quelconque des revendications précédentes, **caractérisé en ce qu'**il comprend une couche de polymère (L) qui est la couche la plus extérieure de celui-ci.

14. Tuyau flexible selon l'une quelconque des revendications précédentes, **caractérisé en ce qu'**il comprend au moins une couche de polymère (L) qui est une couche intermédiaire de celui-ci.

15. Tuyau flexible selon l'une quelconque des revendications précédentes, **caractérisé en ce que** le tuyau flexible (fP) comprend au moins deux couches d'armure métallique séparées par une couche de polymère anti-usure (L).

16. Tuyau flexible selon l'une quelconque des revendications précédentes, **caractérisé en ce que** le tuyau flexible (fP) comprend une voûte de pression et une couche d'armure métallique séparées par une couche de polymère anti-usure (L).

17. Procédé pour produire le tuyau flexible (fP) selon l'une quelconque des revendications précédentes, **caractérisé en ce que**:
au moins deux éléments métalliques longitudinaux sont enroulés de façon hélicoïdale en séquence de manière à former deux couches d'armure, et
des bandes composées de la composition polymère (C) sont enroulées de façon hélicoïdale entre lesdites couches d'armure de manière à former la couche (L),
ladite couche (L) étant une couche anti-usure, et
la composition polymère (C) est extrudée de manière à former de longues feuilles minces, lesdites longues feuilles minces étant fendues de manière à obtenir lesdites bandes, et
lesdites bandes sont jointes bout à bout l'une à l'autre par soudage par ultrasons.
